# EUROPÄISCHE PATENTSCHRIFT

(11) **EP 1 516 763 B1**
(45) Veröffentlichungstag und Bekanntmachung des Hinweises auf die Patenterteilung: **04.11.2009**
(21) Anmeldenummer: 04018787.4
(22) Anmeldetag: 07.08.2004
(51) Int. Cl.: B60J 5/04

(54) **Kastenaufbau**
Body structure
Structure de caisse

(30) Priorität: 19.09.2003 DE 10343915
(43) Veröffentlichungstag der Anmeldung: 23.03.2005
(73) Patentinhaber: Orten, Robert Erich, 54470 Bernkastel-Kues (DE)
(72) Erfinder: Schmiederer, Hermann, 77815 Bühl (DE)
(74) Vertreter: Geitz Truckenmüller Lucht

(56) Entgegenhaltungen:
- EP-A1- 0 004 594
- EP-B1- 0 751 022
- WO-A-97/34793
- DE-A1- 3 121 690
- DE-A1- 3 219 505
- DE-A1- 3 525 628
- DE-A1- 19 839 839
- DE-C1- 4 427 518
- DE-C2- 2 931 111
- DE-C2- 4 033 691
- DE-U1- 7 707 180

## Beschreibung

Die Erfindung betrifft einen Kastenaufbau, insbesondere für Nutzfahrzeuge, mit einem Kastenboden, einem Kastendach, einem Laderaum und wenigstens einer zweiflügeligen Seitenwand, die eine im Bereich des Kastenbodens angelenkte und vorzugsweise um etwa 180° um eine Anlenkachse aus ihrer Schließlage in eine Öffnungslage herausschwenkbaren Klappwand aufweist, und mit einer im Dachbereich in eine Öffnungsstellung hochschwenkbaren Hubwand, die mit der Klappwand mit wenigstens einem biegbaren Zugmittel, vorzugsweise einem Seil oder einer Kette, wirkverbunden ist, das um eine im Dachbereich angeordnete Umlenkrolle geschlungen ist und an der Klappwand im Abstand von der Anlenkachse angreift, so dass beim Herabklappen der Klappwand die Hubwand in eine Öffnungsstellung gelangt, und wobei im Dachbereich ein Stütz- und Führungselement angeordnet ist, an dem die Hubwand beim Verschwenken von ihrer Schließstellung in ihre Öffnungsstellung und umgekehrt unter gleichzeitiger Verschiebung relativ zu dem Stütz- und Führungselement anliegt, und mit einem sich oberhalb des Laderaums erstreckenden Lenker für die Hubwand.

Ein derartiger Kastenaufbau ist aus der DE 40 33 691 C2 bekannt geworden. Bei diesem Kastenaufbau muss das Zugmittel über mehrere Umlenkrollen geführt werden. Ferner ist ein winkelförmiger Lenkerarm vorgesehen, der an seinem freien Ende eine Rolle aufweist, die in einem eine Vertikalführung bewirkenden Schlitz der Hubwand vertikal verschiebbar geführt ist, der wiederum im Bereich des in der Schließstellung unteren Endes der Hubwand endet. An seinem anderen Ende ist der Lenker in einem am Kastenaufbau angeordneten Gelenk gelagert. Der winkelförmige Lenkerarm weist eine mitschwenkende Stützrolle auf, an der sich die Hubwand ausgehend von ihrer Schließstellung bis hin zu einer bestimmten Öffnungsstellung unter gleichzeitiger Verschiebung in einer als Kulissenführung bezeichneten Führungsschiene abstützen kann und von der die Hubwand einem weiteren Öffnen abhebt. An ihrem in Schließstellung oberen Ende ist die Hubwand starr mit einem als Deckwandschenkel bezeichneten und sich etwa rechtwinklig von der Hubwand fort erstreckenden Führungsarm verbunden, der über eine Rolle in der Kulissenführung geführt ist. Diese Konstruktion ist aufwendig und der Laderaum wird durch vorstehende Teile begrenzt.

Ähnliche Konstruktionen mit ähnlichen oder weiteren Nachteilen sind beispielsweise aus der EP 0 751 022 B1, der DE 32 19 505 A1, der EP 0 116 722 B1, der DE 35 25 628 A1, der DE 77 07 180 U1, der EP 0 004 594 A1, der DE 198 39 839 A1 und der DE 29 31 111 C2 bekannt geworden.

Aus der gattungsgemäßen DE 31 21 690 A1 ist eine geteilte Ladebordwand bekannt, bei welcher ein unteres Bordwandteil und ein oberes Bordwandteil über einen umgelenkten Seilzug der Art gekoppelt sind, dass ein Verschwenken des unteren Bordwandteils zwischen einer hoch geklappten und einer abgeklappten Stellung mit einer Verschwenkung des oberen Bordwandteils zwischen einer Schließstellung an der gemeinsamen Wandfläche und einer Öffnungsstellung über dem Dach des Laderaumes gekoppelt ist. Für die Bewegung des oberen Bordwandteils ist eine Anlenksstrebe mit einem Ende an einem ortsfesten Dachlagerbock und mit dem anderen Ende mit dem oberen Bordwandteil gelenkig verbunden ist. Beim Hochschwenken des oberen Bordwandteils in die Öffnungsstellung bzw. beim Zurückschwenken in die Schließstellung stützt sich das obere Bordwandteil an ortsfest am Dachrand gelagerten Umlenkrollen ab. Die Anlenkstreben können mit einem Federkraftspeicher versehen sein, welcher die Rückschwenkung des oberen Bordwandteils aus der Öffnungsstellung unterstützt.

Es ist eine Aufgabe der Erfindung, die aus dem Stand der Technik bekannt gewordenen Kastenaufbauten zu verbessern.

Diese Aufgabe wird durch die Merkmale des Anspruchs 1 dadurch gelöst, dass Mittel zur variablen Einstellung des Abstandes zwischen dem ersten Gelenk des Lenkers und dem zweiten Gelenk des Lenkers vorgesehen sind.

Dabei ist es zweckmäßig, wenn die genannten Mittel eine gestufte oder in bestimmten Rastabständen mögliche Einstellung des Abstandes erlauben oder wenn die genannten Mittel eine stufenlose Einstellung des Abstandes zwischen den beiden Gelenken ermöglicht. Dies ist beispielsweise durch teleskopierbar ineinander geführte Profilteile realisierbar. Auf diese Weise kann also die Länge des Lenkers auf unterschiedliche Hubwandhöhen eingestellt werden, so dass konstruktiv und unter Kostengesichtspunkten vorteilhaft nur ein einziger Lenker für jeweils unterschiedliche Hubwandhöhen verwendbar.

Vorteilhafterweise ist nur ein einziger Lenker vorgesehen.

Es ist ferner von Vorteil, wenn die erste Schwenkachse des ersten Gelenks und die zweite Schwenkachse des zweiten Gelenks des Lenkers in einem Abstand voneinander angeordnet sind, der etwa der Hälfte der Höhe der Hubwand entspricht. Dies bedeutet eine günstige Minimallänge für den starren Lenker, um ausgehend von der Schließstellung der Hubwand, ein vollständiges nach oben Schwenken derselben ohne seitlichen Überstand über das Dach erreichen zu können.

Es ist ferner vorteilhaft, wenn die Hubwand und/oder der Lenker zumindest in einer Zwischenstellung zwischen der Öffnungsstellung und der Schließstellung der Hubwand über eine obere Dachkante des Kastendaches nach oben hinaus ragt.

Es ist ferner vorteilhaft, wenn nur eine einzige Umlenkrolle für das Zugmittel vorgesehen ist.

Schließlich kann vorgesehen sein, dass das Stütz- und Führungselement als Stütz- und Führungsrolle ausgebildet ist, die vorzugsweise koaxial zu der Umlenkrolle und ortsfest im Bereich einer seitlichen Kante des Kastendaches angeordnet ist.

Günstige Voraussetzungen für ein vollständiges nach oben Schwenken der Hubwand über das Kastendach ohne seitlichen Überstand können auch dann erreicht werden, wenn das Zugmittel im Bereich des unteren Endes der Hubwand an dieser angreift.

Gemäß einer besonders vorteilhaften Ausführungsvariante der Erfindung kann vorgesehen sein, dass die Hubwand beim Verschwenken von ihrer Schließstellung in ihre Öffnungsstellung und umgekehrt ständig an dem Stütz- und Führungselement anliegt. Dadurch lassen sich besonders günstige Führungsverhältnisse für die Hubwand bei einer besonders einfachen und kostengünstigen Konstruktion erreichen.

Es ist ferner von Vorteil, wenn wenigstens ein im Dachbereich vorgesehener Kraftspeicher vorgesehen ist, der im Abstand von der ersten Schwenkachse an dem Lenker angreift, so dass der Schließvorgang und/oder der Öffnungsvorgang der Hubwand unterstützt ist. Dabei ist es besonders vorteilhaft, wenn es sich bei dem Kraftspeicher um eine Zugfeder handelt, deren erstes Ende in einem ersten Abstand von der ersten Schwenkachse des Lenkers an einem mit diesem verbundenen Befestigungsmittel angreift, das zusammen mit dem Lenker um die erste Schwenkachse schwenkbar ist und deren zweites Ende in einem gegenüber dem ersten Abstand kleineren zweiten Abstand von der ersten Schwenkachse des Lenkers an einer Federangriffsstelle angreift, die ortsfest mit dem Dachbereich verbunden ist. Dadurch lässt sich eine besonders kompakte und kostengünstige Anordnung schaffen, ohne dass irgendwelche Teile in den von dem Kastenboden, dem Kastendach und der zweiflügeligen Seitenwand begrenzten Laderaum hineinstehen würden.

Dabei ist es ferner vorteilhaft, wenn die Federangriffsstelle an einem im Dachbereich ortsfest angeordneten Umlenkgehäuse in einem vertikalen Abstand oberhalb der vorzugsweise an dem Umlenkgehäuse gelagerten ersten Schwenkachse angeordnet ist. Es ist demgemäß möglich, eine oder mehrere Zugfedern an der bzw. den Federangriffsstellen zu befestigen. Gemäß einer besonders vorteilhaften Ausführungsvariante kann vorgesehen sein, dass die oder jede Federangriffsstelle mit einem Gelenk für eine um eine Drehachse drehbare Aufhängung für die Feder ausgebildet ist, an der das zweite Ende der Zugfeder befestigt ist. Dadurch ist eine günstige Verlängerung des Federweges möglich bzw. sind längere Zugfedern, die ggf. auch mit eine geringere Federsteigung aufweisen können, einbaubar.

Zum Ausgleich von unterschiedlichen Gewichtsverhältnissen der Hubwand und der Klappwand können mehrere Federangriffsstellen vorgesehen sein, an denen die Zugfeder wahlweise festlegbar ist, wobei wenigstens eine Federangriffsstelle quer zur ersten Schwenkachse in Horizontalrichtung gegenüber einer benachbarten Federangriffsstelle versetzt angeordnet sein kann. Auf diese Weise können beim Öffnen und Schließen etwa die gleichen Betätigungskräfte eingestellt werden.

Gemäß einer vorteilhaften Weiterbildung der Erfindung kann die Aufhängung mit einem langgestreckten Profil gestaltet sein, das eine erste Befestigungsstelle für eine erste Feder aufweist und das eine zweite Befestigungsstelle für eine zweite Feder aufweist, wobei die Drehachse der Aufhängung zwischen der ersten Feder und der zweiten Feder angeordnet ist. Dies ermöglicht günstige Federkraftverhältnisse sowohl beim Öffnen als auch beim Schließen der Hubwand im Sinne einer günstigen Unterstützung der Öffnungsbewegung und der Schließbewegung.

Es ist ferner vorteilhaft, wenn die Aufhängung als ein sich beiderseits der Drehachse erstreckendes Profil gestaltet ist, was eine vorteilhafte Abstützung der Aufhängung über beiderseits der Drehachse angeordnete Federn ermöglicht.

Ferner kann eine erste Befestigungsstelle für die erste Feder an einer quer zur Drehachse der Aufhängung und quer zu einem langgestreckten Profil der Aufhängung angeordneten Befestigungsposition vorgesehen sein und eine zweite Befestigungsstelle für eine zweite Feder an einer in etwa entgegengesetzter Richtung quer zur Drehachse der Aufhängung und quer zu dem Profil angeordneten Befestigungsposition, und ferner kann an dem Lenkerarm eine dritte Befestigungsstelle für die erste Feder an einer quer zu diesem und quer zu seiner Lenkerachse angeordneten Befestigungsposition vorgesehen sein, und schließlich kann eine vierte Befestigungsstelle für die zweite Feder an einer in etwa entgegengesetzten Richtung quer zu dem Lenkerarm und quer zu seiner Lenkerachse angeordneten Befestigungsposition vorgesehen sein.

Es ist schließlich vorteilhaft, wenn an dem Lenkerarm ein Befestigungskörper befestigt ist, an dem wenigstens eine der Federn angreift und der dazu bestimmt ist, unterschiedliche Federspannungen einstellen zu können. Mit Hilfe dieses Befestigungskörpers kann dann die Feder beliebig gespannt werden, so dass auch insoweit unterschiedliche Gewichtsverhältnisse von Hubwand und Klappwand ausgeglichen werden können. Dabei ist es zweckmäßig, wenn der Befestigungskörper eine stufenlose Einstellung der Federspannung ermöglicht.

In konkreterer Ausgestaltung kann vorgesehen sein, dass der Befestigungskörper als ein sich an dem Lenkerarm abstützender und längs desselben verschiebbarer Schiebeteil gestaltet ist, an dem ein Schenkel mit einem sich längs des Lenkerarms erstreckenden Innengewindes einer Durchgangsbohrung befestigt ist, in dem ein Gewindebolzen mit Außengewinde eingeschraubt ist, dessen freies und aus dem Schenkel herausragendes Ende sich an einem Querschenkel des Lenkerarms abstützt, so dass durch Drehen des Gewindebolzens um seine Längsachse eine Verschiebung des Schiebeteils längs des Lenkers und folglich eine Spannung oder Entspannung der wenigstens einen Feder erreichbar ist.

Von besonderem Vorteil ist es, wenn der Kastenaufbau an seinen beiden seitlichen Stirnseiten jeweils eine zweiflügelige Seitenwand nach einem der Ansprüche 1 bis 19 aufweist, wobei ein erster Lenker einer ersten Seitenwand um eine im Dachbereich des Kastenaufbaus ortsfest angeordnete erste Lenkerachse schwenkbar gelagert ist, und wobei ein zweiter Lenker einer zweiten Seitenwand um eine im Dachbereich des Kastenaufbaus ortsfest angeordnete zweite Lenkachse schwenkbar gelagert ist, wobei der zweite Lenker in Richtung der Drehachse des ersten Lenkers versetzt angeordnet ist, so dass sich bei vollständig über das Kastendach hochgeschwenkten und sich im Bereich ihrer in den Schließlagen oberen Enden überlappenden Hubwänden die beiden Lenker überkreuzen. Auf diese Weise lässt sich also ein Kastenaufbau mit zwei gegenüberliegend angeordneten Seitenwänden mit höheren Hubwänden schaffen, beispielsweise mit einer Höhe von mehr als 1250 mm, insbesondere von mehr als 1600 mm. Ferner kann durch die vorgenannten Maßnahmen in einfacher Weise zunächst die eine Hubwand nahezu flach auf das Dach legen und zweckmäßiger Weise anschließend kann die zweite Hubwand schräg darüber gelegt werden, wobei sich dann die Hubwände an ihren in Schließstellung oberen Enden teilweise überlappen. Dies ist gegenüber aus dem Stande der Technik bekannt gewordenen Ausführungen mit klappbaren Teil-Hubwänden oder bei denen die Hubwände um 45° nach oben gestellt werden müssen, deutlich einfacher und/oder wird nicht soviel Platz benötigt.

Weitere Vorteile, Merkmale und Gesichtspunkte der Erfindung sind dem nachfolgenden Beschreibungsteil entnehmbar, in dem ein vorteilhaftes Ausführungsbeispiel der Erfindung anhand der Figuren beschrieben wird.

Es zeigen:
- Fig. 1:: einen Teilquerschnitt eines Kastenaufbaus mit seitlich teilweise geöffneter Ladewand, wobei aus Darstellungsgründen die Zugfedern weggelassen wurden;
- Fig. 2:: einen Teilquerschnitt eines Kastenaufbaus bei vollständig geöffneter Ladewand;
- Fig. 3:: einen Teilquerschnitt eines Kastenaufbaus bei vollständig geschlossener Ladewand;
- Fig. 4:: einen Teilquerschnitt im Dachbereich über die gesamte Breite eines Kastenaufbaus mit beiderseits desselben angeordneten, jeweils vollständig geöffneten Hubwänden, wobei aus Darstellungsgründen die Zugfedern weggelassen wurden;
- Fig. 5:: einen Teilquerschnitt im Bereich einer vertikalen Runge eines Kastenaufbaus bei geschlossener Hubwand;
- Fig. 6:: eine dreidimensionale Teildarstellung eines Kastenaufbaus im Dachbereich bei geschlossener Hubwand, wobei aus Darstellungsgründen die Zugfedern weggelassen wurden;
- Fig. 7:: eine Seitenansicht im Bereich eines Lenkers für eine Hubwand;
- Fig. 8:: eine gegenüber der Darstellung von Fig. 7 um 90° nach links gedrehte Ansicht im Bereich eines ersten Lenkers für eine erste Hubwand;
- Fig. 9:: eine der Fig. 8 entsprechende Ansicht im Bereich eines zweiten Lenkers für eine zweite Hubwand.

Der Kastenaufbau 10 eines Nutzfahrzeuges ist vorzugsweise mit zwei seitlichen Ladewänden 11; 11.1, 11.2 ausgestattet, die jeweils als eine zweiflügelige Seitenwand 12; 12.1, 12.2 gestaltet sind, welche wiederum jeweils aus einer Hubwand 13; 13.1, 13.2 und einer Klappwand 14 gebildet ist. Der Kastenaufbau 10 besteht im Wesentlichen aus einem Kastendach 15, einem Kastenboden 16 und den zweiflügeligen Seitenwänden 12; 12.1, 12.2 und wenigstens an den Eckpunkten des Kastenaufbaus 10 aus vertikalen, das Kastendach 15 mit dem Kastenboden 16 verbindenden vertikalen Rungen 17. Die vorgenannten Teile begrenzen einen Laderaum 18.

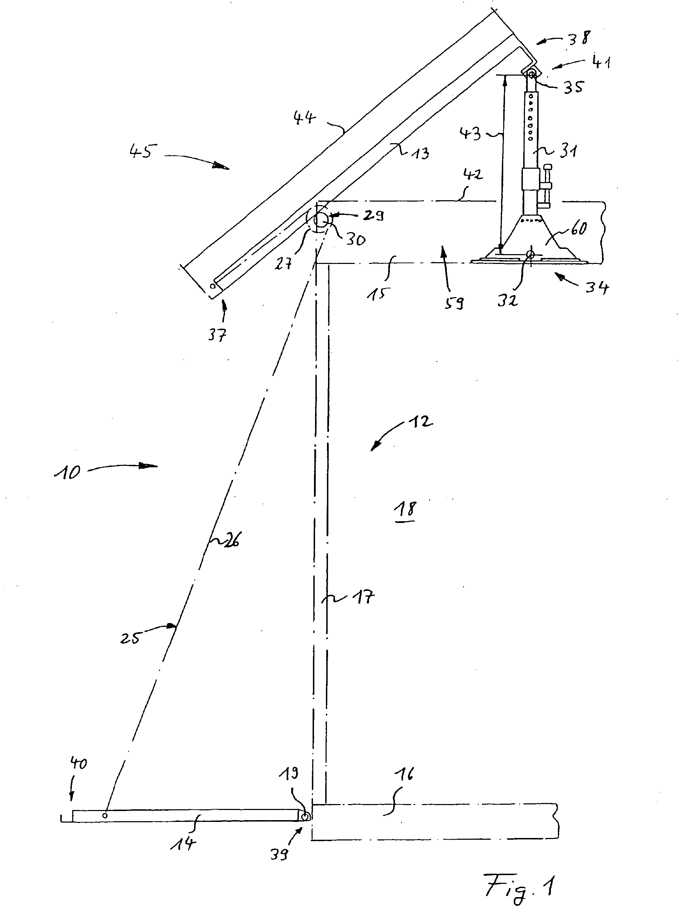

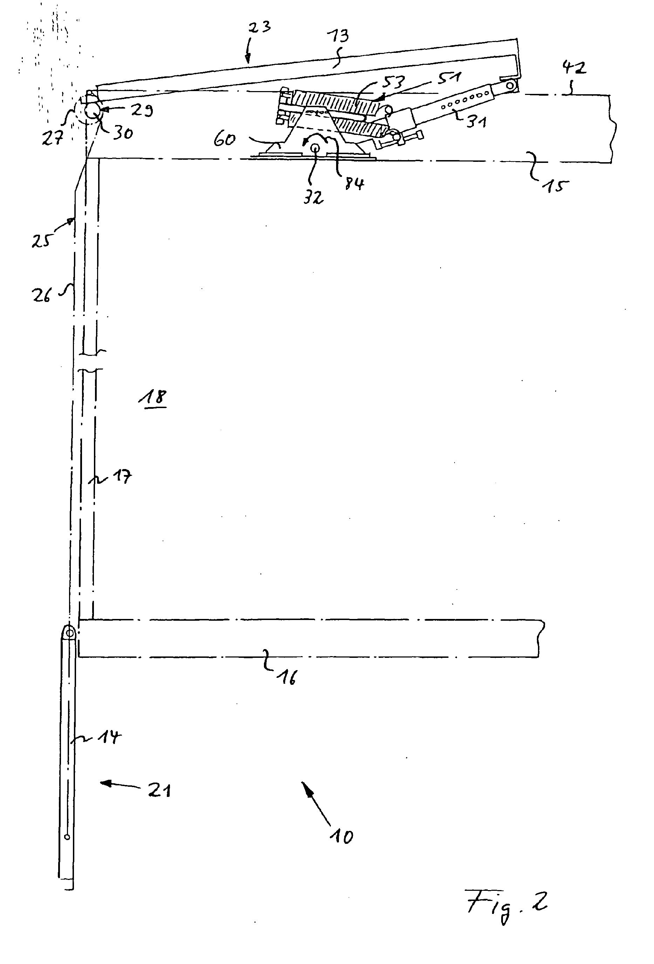

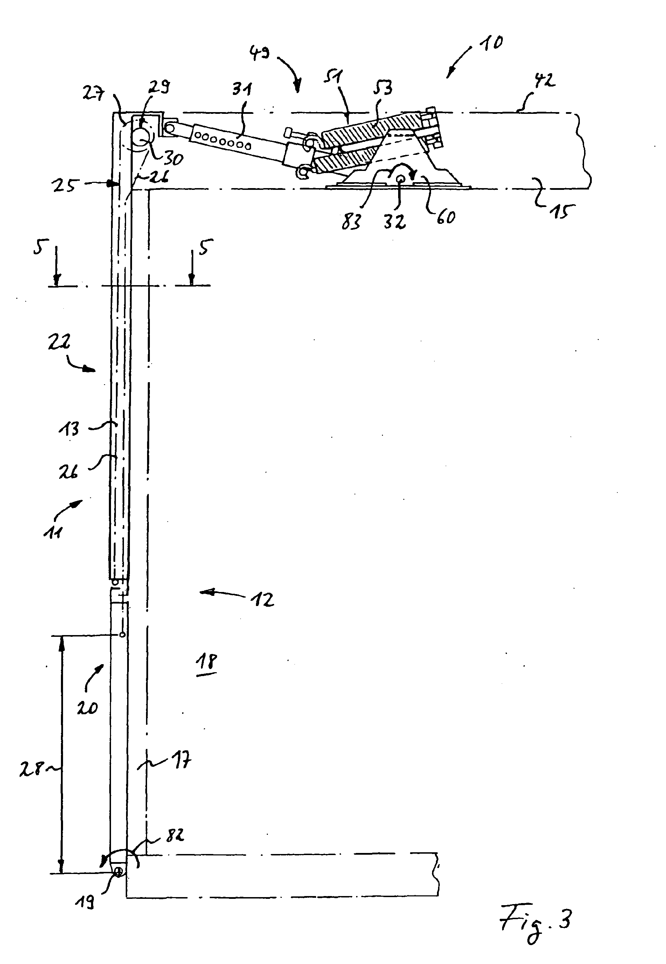

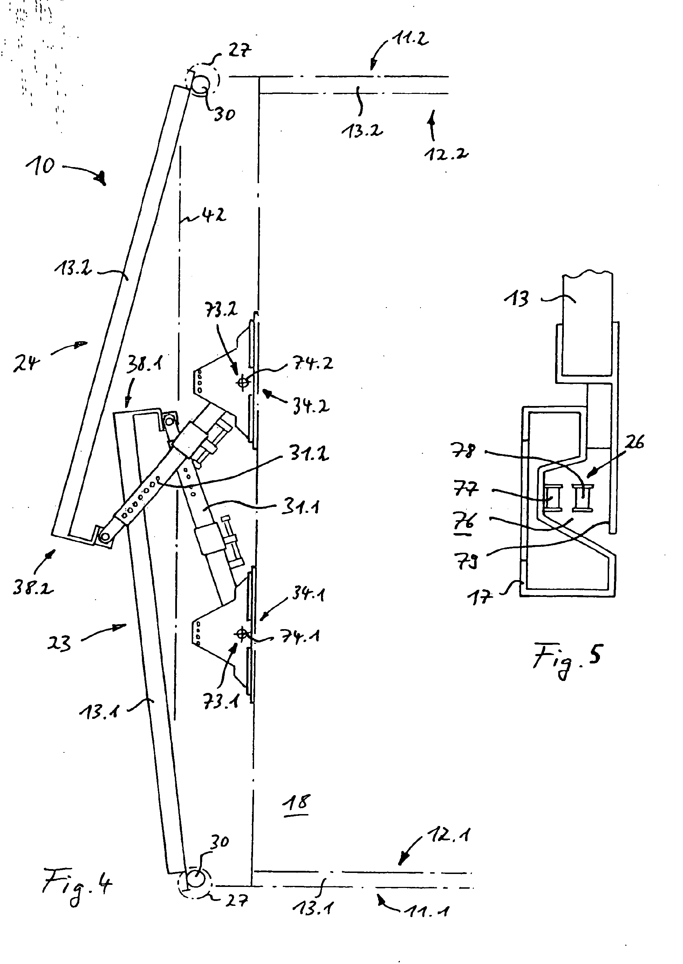

Die Klappwand 14 ist im Bereich des Kastenbodens 16 angelenkt und ist dort um eine horizontale Anlenkachse 19 in einer vertikalen Schwenkebene beispielsweise aus ihrer in Figur 3 gezeigten Schließlage 20 in eine in Figur 2 gezeigte Öffnungslage 21 herausschwenkbar, und zwar vorzugsweise um etwa 180°. Die Hubwand 13; 13.1; 13.2 kann ausgehend von der in Figur 3 gezeigten Schließlage drehverschieblich um eine als Stütz- und Führungselement 29 dienende, ortsfest angeordnete Stütz- und Führungsrolle 30 über eine in Figur 1 gezeigte Zwischenstellung 45 in eine in Figur 2 bzw. Figur 4 gezeigte Öffnungsstellung 23, 24 hochgeschwenkt werden.

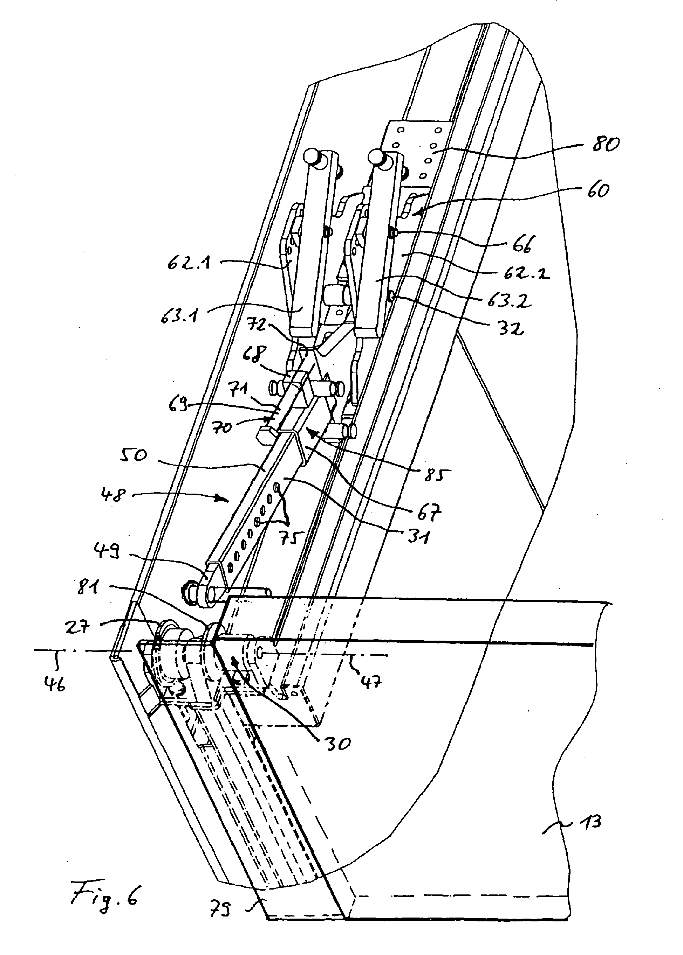

In einem Abstand 28 von der Anlenkachse 19 der unteren Klappwand 14 ist eine als biegbares Zugmittel 25 fungierende Gliederkette 26 mit ihrem einem Ende an einer Aufnahme befestigt. Es versteht sich, dass anstelle einer Gliederkette 26 auch ein Seil oder dergleichen verwendet werden kann. Wie insbesondere aus Figur 5 ersichtlich, liegt die Gliederkette 26 im geschlossenen Zustand der Seitenwand 12 in einer Rungenausnehmung 76 der Runge 17 und wird durch Einfassungsprofile 79 der Hubwand 13 und durch nicht näher dargestellte entsprechende Einfassungsprofile der Klappwand 14 im geschlossenen Zustand abgedeckt und ist somit von außen in der Schließstellung nicht sichtbar. Ausgehend von der vorerwähnten Aufnahme erstreckt sich die Gliederkette 26 mit einem innenliegenden Kettenteil 77 nach oben und wird an einer im Bereich des seitlichen Randes des Kastendaches 15 angeordneten und um eine parallel zur Anlenkachse 19 drehbaren Umlenkrolle 27, die hier als Kettenrad ausgebildet ist, umgelenkt. Von dort aus läuft die Gliederkette 26 mit ihrem außenliegenden Kettenteil 78 entlang der Hubwand 13, an deren, in Figur 3 gezeigten Schließstellung 22 unterem Ende 37, das andere Ende der Gliederkette 26 ebenfalls an einer Aufnahme befestigt ist. Die Hubwand 13 stützt sich an einer Innenseite ständig an der Stütz- und Führungsrolle 30 ab, deren Drehachse 47 im Ausführungsbeispiel mit der Drehachse 46 der Umlenkrolle 27 zusammenfällt und die seitlich neben der Umlenkrolle 27 angeordnet ist (Figur 6). Die Stütz- und Führungsrolle 30 ist mit wenigstens einem sich radial nach außen erstreckenden umlaufenden Führungskragen 81 zur seitlichen Führung der Hubwand 13; 13.1, 13.2 versehen. Zweckmäßigerweise sind pro Seitenwand zwei derartige Stütz- und Führungsrollen 30 vorgesehen, die in einem der Breite der Hubwand 13 entsprechenden Abstand voneinander angeordnet sind und die jeweils an ihren sich voneinander lateral nach außen erstreckenden Enden einen Führungskragen 81 aufweisen.

Insbesondere der Abstand 28 des Angriffpunktes für das Zugmittel 25 an der Klappwand 14 von deren Anlenkachse 19 ist derart gewählt, dass bei der in ihre Öffnungslage 21 verschwenkten Klappwand 14 die Hubwand 13; 13.1, 13,2 vollständig und ohne seitlichen Überstand in eine Öffnungsstellung 23, 24 hochgeschwenkt ist, in der sie also die Breite des Kastenaufbaus 10 im Dachbereich 59 seitlich nicht überragt und folglich auch nicht beim Beladen und/oder Entladen von Ladegut, insbesondere durch Stapler, nicht beschädigt werden kann, so dass auch die mit der Hubwand verbundenen Teile auf diese Weise nicht beschädigt werden.

Als weiteres Führungselement für die Hubwand 13; 13.1, 13.2 ist ein sich oberhalb des Laderaums 18 erstreckender Lenker 31; 31.1, 31,2 angeordnet. Dieser Lenker 31; 31.1, 31.2 ist um eine erste Schwenkachse 32 bzw. Lenkerachse 73.1, 73.2 eines an einem seiner Enden 33 im Dachbereich 59 ortsfest angeordneten ersten Gelenks 34; 34.1, 34.2 frei schwenkbar angelenkt und ist um eine zweite Schwenkachse 35 eines an seinem anderen Ende 36 angeordneten und mit der Hubwand 13 im Bereich ihres in der Schließstellung 22 oberen Endes 38 verbundenen zweiten Gelenks 41 ebenfalls schwenkbar angelenkt. Die Gelenke 34; 34.1, 34.2 und 41 sind vorzugsweise jeweils als ein Drehgelenk mit einer parallel zueinander angeordneten Drehachse gestaltet, die jeweils senkrecht zu einer vertikalen Schwenkebene der Hubwand 13; 13.1, 13.2 angeordnet sein können. Das erste, untere Gelenk 34; 34.1, 34.2 ist Teil eines im Dachbereich 59, vorzugsweise an einer Befestigungsschiene 80, während der Schwenkbewegung des Lenkers 31 ortsfest, vorzugsweise lösbar befestigten Umlenkgehäuses 60, das im Ausführungsbeispiel mit zwei parallelen, sich vertikal nach oben erstreckenden Schenkeln 61.1 und 62.2 gestaltet ist (siehe insbesondere Figur 6). Die erste Schwenkachse 32; 73.1, 73.2 des ortsfest angeordneten ersten Gelenks 34; 34.1, 34.2 und die zweite Schwenkachse 35 des mit der Hubwand 13 gelenkig verbundenen zweiten Gelenks 41 des Lenkers 31; 31.1, 31.2 sind in einem Abstand 43 voneinander angeordnet, der hier etwa der Hälfte der Höhe 44 der Hubwand 13; 13.1, 13.2 entspricht. Dadurch ist es möglich, mit diesem, einzigen starren Lenker 31 die Hubwand 44 ausgehend von ihrer beispielsweise in Figur 3 gezeigten Schließstellung 22 bis in eine in Figur 2 oder in Figur 4 gezeigte Öffnungsstellung 23, 24 hoch zu schwenken, in der die Hubwand 13; 13.1, 13.2 vollständig über das Dach 15 und ohne seitlichen Überstand über die vertikale Flucht des Kastenaufbaus 10 nach oben verschwenkt werden kann. Zumindest in der in Figur 1 gezeigten Zwischenstellung 45 ragt der Lenker 31 über die obere Dachkante 42 des Kastendaches 15 hinaus, was im Ausführungsbeispiel auch für die Hubwand 13 im Hinblick auf deren Anordnung, Ausgestaltung und Befestigung an dem Lenker 31; 31.1, 31.2 zutrifft. In der in Figur 1 gezeigten Zwischenstellung 45 erstreckt sich der Lenker 31 also vertikal nach oben über die obere Dachkante 42 hinaus.

Zur variablen Einstellung des Abstandes 43 der Länge des Lenkers 31; 31.1, 31.2 umfasst dieser im gezeigten Ausführungsbeispiel zwei teleskopierbar ineinander geführte Profilteile, und zwar eine Profilstange 49 und ein Profilrohr 50, deren Innenkontur auf die Außenkontur der Profilstange 49 abgestimmt gestaltet ist, so dass die Profilstange 49 in Längsrichtung der Rohrachse des Profilrohrs 50 in dem Profilrohr 50 verschiebbar ist. Im Ausführungsbeispiel weisen sowohl das Profilrohr 50 als auch die darin geführte Profilstange 49 in Längsrichtung des Lenkers 31 beabstandete in einer Lochreihe angeordnete Durchgangslöcher auf, durch die ein oder mehrere Steckbolzen 75 zur Fixierung der Profilstange 49 an dem Profilrohr 50 in der gewünschten Abstandslänge hindurchsteckbar sind.

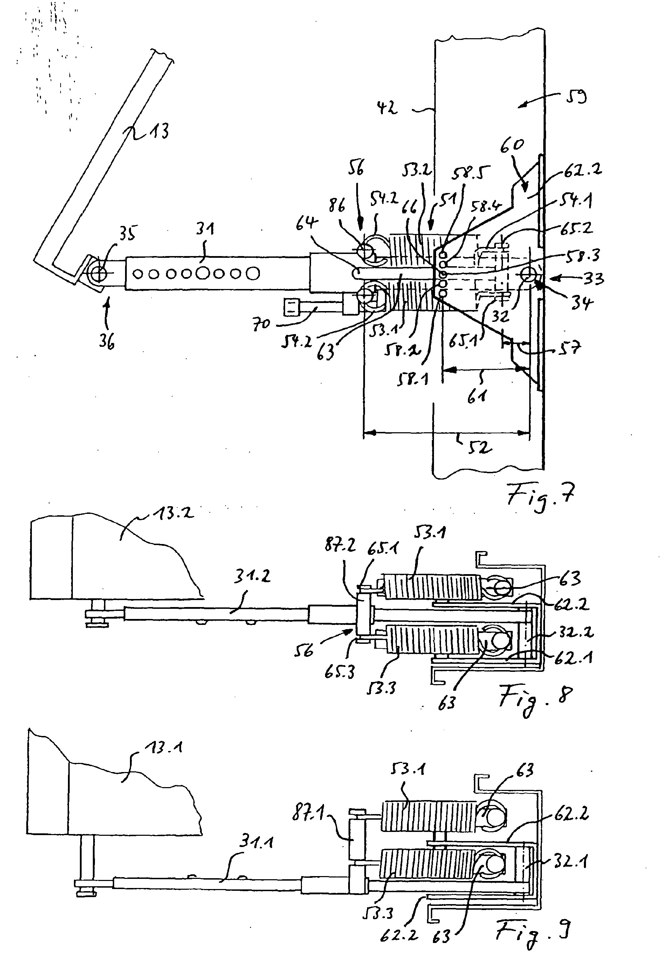

Zur Unterstützung des Schließvorganges und des Öffnungsvorganges der Hubwand 13 sind im Ausführungsbeispiel mehrere, als Kraftspeicher 51 dienende Zugfedern 53; 53.1 bis 53.4 vorgesehen. Deren jeweiliges erstes Ende 54.1 greift in einem ersten Abstand 52 von der ersten Schwenkachse 32; 73.1, 73.2 des Lenkers 31; 31.1, 31.2 an einem mit diesem verbundenen Befestigungsmittel, hier in Form eines Befestigungsbolzens an, das bzw. der mit dem Lenker 31; 31.1, 31.2 um dessen erste Schwenkachse 32; 73.1, 73.2 mitschwenkbar ist, wenn der Lenker 31; 31.1, 31.2 um die Schwenkachse 32; 73.1, 73.2 verschwenkt wird. Das jeweilige zweite Ende 54.2 der Zugfedern 53; 53.1 bis 53.4 greift in einem zweiten Abstand 57 von der ersten Schwenkachse 32; 73.1, 73.2 des Lenkers 31; 31.1, 31.2 an einer Federangriffsstelle 58; 58.1 bis 58.5 an, die ortsfest mit dem Dachbereich 59 verbunden ist. Dabei ist der zweite Abstand 57 im gezeigten Ausführungsbeispiel kleiner als der erste Abstand 52. Die Federangriffsstellen 58; 58.1 bis 58.5 sind hier als Drehgelenke bzw. Drehachsen gestaltet, und zwar im Ausführungsbeispiel für eine Aufhängung 63; 63.1, 63.2 für die Federn 53.1 bis 53.4, wodurch der Federweg der Federn vorteilhaft verlängerbar ist. Die Aufhängung 63; 63.1, 63.2 weist im Bereich ihres einen Endes einen sich in der vertikalen Schwenkebene des Lenkers 31; 31.1, 31.2 erstreckenden Befestigungsbolzen auf, der als Befestigungsmittel für die jeweiligen zweiten Enden 54.2 der Zugfedern 53.1 bis 53.4 dient, wie insbesondere aus Figur 7 ersichtlich. Die Aufhängung 63; 63.1, 63.2 ist um eine parallel zur ersten Schwenkachse 32, 73.1, 73.2 des Lenkers 31; 31.1, 31.2 im Abstand 61 angeordnete Drehachse 66 drehbar, die in dem gezeigten Ausführungsbeispiel an der mittleren der hier insgesamt 5 Federangriffsstellen 58.1 bis 58.5 drehbar gelagert ist. Demgemäß sind im Ausführungsbeispiel mehrere quer zur ersten Schwenkachse 32; 73.1, 73.2 des Lenkers 31; 31.1, 31.2 in Horizontalrichtung gegenüber einer benachbarten Federangriffsstelle versetzt angeordnete Federangriffsstellen vorgesehen, an denen die Aufhängung 63; 63.1, 63.2 wahlweise lagerbar ist. Es versteht sich jedoch, dass die Aufhängung 63; 63.1, 63.2 gegebenenfalls auch weggelassen werden kann, wobei dann die Federn 53.1 bis 53.4 unmittelbar an den Federangriffsstellen 58.1 bis 58.5 wahlweise festlegbar sind. Auch in diesem Fall sind die Federangriffsstellen 58.1 bis 58.5 vorzugsweise als Gelenk bzw. Drehpunkt für die Federn 53.1 bis 53.4 ausgebildet. Es versteht sich ferner, dass anstelle von vier Zugfedern gegebenenfalls auch nur eine einzige Zugfeder verwendet werden kann.

Wie insbesondere aus Figur 7 ersichtlich, ist die Aufhängung 63; 63.1, 63.2 mit einem langgestreckten Profil 64 gestaltet, das eine erste Befestigungsstelle 65.1 für eine erste Feder 53.1 aufweist und das eine zweite Befestigungsstelle 65.2 für eine zweite Feder 53.2 aufweist, wobei die Befestigungsstellen hier an den sich quer zu dem langgestreckten Profil 64 erstreckten Befestigungsbolzen ausgebildet sind, und wobei die Drehachse 66 der Aufhängung 63 zwischen der ersten Feder 53.1 und der zweiten Feder 53.2 angeordnet ist. Die Aufhängung 63; 63.1, 63.2 ist im Ausführungsbeispiel als ein sich beiderseits der Drehachse 66 erstreckendes langgestrecktes Profil 64, also mit sich von der Drehachse 66 in entgegengesetzte Richtungen erstreckenden Profilschenkeln gestaltet, so dass eine günstige Abstützung der Aufhängung 63 über die beiderseits der Drehachse 66 und beiderseits des langgestreckten Profils 64 angeordneten Zugfedern 53.1 und 53.2 möglich ist.

Zur lenkerseitigen Befestigung der Federn 53.1 bis 53.4 ist an dem Lenkerarm 31; 31.1, 31.2 ein als Schiebeteil 67 gestalteter Befestigungskörper 66 vorgesehen, an dem die Federn 53.1 bis 53.4 angreifen und der dazu bestimmt ist, unterschiedliche Federspannungen einstellen zu können. Im Ausführungsbeispiel greifen die Federn 53.1 bis 53.4 an sich etwa parallel zur ersten Schwenkachse 32; 73.1, 73.2 des Lenkers 31; 31.1, 31.2 jeweils seitlich nach außen erstreckenden Befestigungsbolzen an Befestigungsstellen 65.1 bis 65.4 an, wobei jeweils zwei Federn auf voneinander wegweisenden Seiten des Lenkers 31 angeordnet sind (Figuren 8 und 9) .

Der Schiebeteil 67 ist auf dem Lenker 31; 31.1, 31.2 längs desselben verschiebbar angeordnet. Der Schiebeteil 67 weist einen sich quer zur Lenkerachse 32, 73.1, 73.2 erstreckenden Schenkel 68 auf, der im Ausführungsbeispiel mit einem sich längs des Lenkers 31; 31.1, 31.2 erstreckenden Innengewinde 69 ausgebildet ist, in das ein mit passendem Außengewinde 71 gestalteter Gewindebolzen 70 eingeschraubt ist, dessen aus dem Schenkel 68 auf seiner anderen Seite herausragendes Ende sich an einem Querschenkel 72 des Lenkers 31 abstützt (siehe insbesondere Figur 6). Auf diese Weise kann durch Drehen des Gewindebolzens 70 in die eine oder andere Richtung der Abstand des Schiebeteils 67 und folglich der Abstand der zur Befestigung dienenden Befestigungsbolzen relativ zu der ersten Schwenkachse 32; 73.1, 73.2 des Lenkers 31; 31.1, 31.2 unterschiedlich eingestellt werden, wodurch unterschiedliche Federspannungen eingestellt werden können.

Aus Figur 4 ist ersichtlich, dass der Kastenaufbau 10 vorzugsweise an seinen gegenüberliegenden Längsstirnseiten jeweils mit einer zweiflügeligen Seitenwand 12.1 und 12.2 versehen sein kann. Dabei sind die Seitenwände 12.1 und 12.2 vorzugsweise aus im Wesentlichen gleichen Teilen gestaltet, wie die Seitenwand 12 gemäß den Figuren 1 bis 3 sowie 5 bis 7, mit Ausnahme der Lenkerkonstruktionen (Figuren 8 und 9). Dabei kann ein erster Lenker 31.1 einer ersten Seitenwand 12.1 um eine im Dachbereich 59 des Kastenaufbaus 10 ortsfest angeordnete erste Lenkerachse 73.1 um eine Drehachse 74.1 schwenkbar gelagert sein, wobei ein zweiter Lenker 31.2 einer zweiten Seitenwand 12.2 um eine ebenfalls im Dachbereich 59 des Kastenaufbaus 10 ortsfest angeordnete zweite Lenkerachse 73.2 um eine Drehachse 74.2 schwenkbar gelagert sein kann, wobei der zweite Lenker 31.2 in Richtung der Drehachse 74.1 des ersten Lenkers 31.1 quer zu dem ersten Lenker 31.1 versetzt angeordnet ist. Diese Lenkerkonstruktionen unterscheiden sich also im Wesentlichen durch unterschiedliche Befestigungsmittel, hier Befestigungsbolzen, an denen die zweiten Enden der Federn 53.1 bis 53.4 befestigt sind, und ferner durch die Lage und Anordnung der Lenker 31.1, 31.2 relativ zu ihren Schwenkachsen 73.1 und 73.2, während die Federn 53.1 bis 53.4, die Aufhängungen 63.1, 63.2 und die Umlenkgehäuse 60 mit ihren vertikal aufragenden Schenkeln 62.1 und 62.2 jeweils gleich gestaltet sind. Auf diese Weise kann durch eine nur kleine Änderung im Bereich der lenkerseitigen Befestigungsstellen für die Zugfedern sowie Anordnung der Lenker 31.1, 31.2 relativ zu ihrer Lenkerachse 73.1, 73.2 eine besonders einfache, kostengünstige und platzsparende Anordnung erreicht werden, die insbesondere bei Hubwänden 13.1 und 13.2 mit einer Höhe 44.1 und 44.2 einsetzbar ist, die größer ist als die halbe Breite des Kastenaufbaus 10 zwischen seinen Stirnseiten. Durch die Gestaltung und Anordnung im Bereich der Lenker 31.1. und 31.2 können die Hubwände 13.1 und 13.2, wie in Figur 4 gezeigt, vorteilhaft übereinander geschwenkt werden derart, dass sie sich im Bereich ihrer in der Schließstellung 22 oberen Enden 38.1 und 38.2 überlappen, wobei sich dann die Lenker 31.1 und 31.2 überkreuzen.

Nachfolgend wird das Öffnen der zweiflügeligen Seitenwand 12 ausgehend von der in Figur 3 gezeigten Schließstellung beschrieben, in der sich also die Hubwand 13 in ihrer Schließstellung 22 und in der sich die Klappwand 14 in ihrer Schließlage 20 befindet. Zum Öffnen der zweiflügeligen Seitenwand 12 wird die Klappwand 14 vorzugsweise manuell in Richtung des Pfeils 82 um ihre Anlenkachse 19 nach unten geschwenkt. Dadurch und bedingt durch die Wirkverbindung der Klappwand 14 mit der Hubwand 13 über das zumindest eine, wenigstens teilweise um die Umlenkrolle 30 geschlungene biegsame Zugmittel 25 wird bewirkt, dass die Hubwand 13 zunächst in eine einer Öffnungsstellung entsprechenden Zwischenstellung 45 gelangt, wie aus Figur 1 ersichtlich. Dabei wird die Hubwand 13 durch den an ihrem in Schließstellung 22 oberen Ende 38 über den an dem Gelenk 41 angelenkten Lenker 31 geführt, der im Zuge des Hochschwenkens der Hubwand 13 um seine auch als Schwenkachse 32 bezeichnete Lenkerachse verschwenkt wird. Zugleich wird die Hubwand 13 von der Stütz- und Führungsrolle geführt und abgestützt, an der sie unter einer Gleit-Drehbewegung vorzugsweise ständig anliegt. Im Zuge des im Wesentlichen durch das Eigengewicht der Klappwand 14 weiteren Verschwenkens der Klappwand 14 bis in die aus Figur 2 hervorgehende Schließlage 20, wird die Hubwand 13 vollständig über das den Laderaum 18 vertikal nach oben begrenzende Kastendach 15 verschwenkt, bis in eine Stellung, in der die Hubwand 13 seitlich nicht mehr über die vertikale Flucht des Kastenaufbaus 10 hinausragt, wie in Figur 2 dargestellt. Um sowohl den Öffnungsvorgang der Hubwand 13, ausgehend von der in Figur 3 gezeigten Schließstellung 22, als auch den Schließvorgang, ausgehend von der in Figur 2 gezeigten Öffnungsstellung 23, vorteilhaft unterstützten zu können, sind als Kraftspeicher 51 die Zugfedern 53.1 bis 53.4 vorgesehen. Die Federn 53 sind dabei derart angeordnet und befestigt, dass sie in der in Figur 3 gezeigten Schließstellung 22 der Hubwand 13 ein deren Öffnungsbewegung unterstützendes Drehmoment (Pfeil 83) auf den Lenker 31 ausüben, während sie in der in Figur 2 gezeigten Öffnungsstellung 23 der Hubwand 13 auf den Lenker 31 ein in Richtung des Pfeils 84, also entgegengesetzt wirkendes Drehmoment ausüben. Im Unterschied dazu wird durch die Federn 53 in einer bestimmten Zwischenstellung der Hubwand 13 zwischen deren Öffnungsstellung 23 und deren Schließstellung 22, von den Federn 53 kein eine Verschwenkung des Lenkers 31 um seine Lenkerachse bewirkendes Drehmoment auf den Lenker 31 ausgeübt, so dass der Lenker 31 in seiner der Zwischenstellung entsprechenden Schwenkstellung einen Gelenk-Totpunkt erreicht hat. Sofern, wie im Ausführungsbeispiel dargestellt, wenigstens eine der Federn 53 mit ihrem ersten Ende 54.1 entweder unmittelbar an der vorzugsweise als Drehpunkt fungierenden Federangriffsstelle 58.3 oder mittelbar über die dort an der Drehachse 66 angelenkte Aufhängung 63 relativ zum Dachbereich 59, hier dem Umlenkgehäuse 60, ortsfest angreift, befindet sich der Lenker 31 etwa in der in Figur 1 gezeigten Zwischenstellung, in welcher er vertikal nach oben und über die obere Dachkante 42 des Kastendaches 15 aufragt. In dieser Stellung, welche der Zwischenstellung 45 der Hubwand 13 entspricht, ist die Hubwand 13 etwa in einem Winkel von etwa 45° zur Vertikalen bzw. zur Horizontalen geneigt angeordnet. Spätestens in dieser Neigungsstellung, kann die Hubwand 13 bedingt durch ihr Eigengewicht und gegebenenfalls unterstützt durch manuelles Anheben bzw. Hochschwenken der Klappwand 14 weiter nach unten schwenken, wobei die Klappwand 14 dann bedingt durch die Wirkungskopplung des an dem Stütz- und Führungselement umgelenkten Zugglieds 25 hochgeschwenkt wird, bis sich die Hubwand 13 in ihrer Schließstellung 22 befindet. Dann befindet sich auch die Klappwand 14 in ihrer in Figur 3 gezeigten Schließlage 20.

## Patentansprüche

1. Kastenaufbau (10), insbesondere für Nutzfahrzeuge, mit einem Kastenboden (16), einem Kastendach (15), einem Laderaum (18) und wenigstens einer zweiflügligen Seitenwand (12; 12.1, 12.2), die eine im Bereich des Kastenbodens (16) angelenkte und um eine Anlenkachse (19) aus ihrer Schließlage (20) in eine Öffnungslage (21) herausschwenkbaren Klappwand (14) aufweist, und mit einer im Dachbereich (59) in eine Öffnungsstellung (23, 24) hochschwenkbaren Hubwand (13; 13.1, 13.2), die mit der Klappwand (14) mit wenigstens einem biegbaren Zugmittel (25) verbunden ist, das um eine im Dachbereich (59) angeordnete Umlenkrolle (27) geschlungen ist und an der Klappwand (14) im Abstand (28) von der Anlenkachse (19) angreift, so dass beim Herabklappen der Klappwand (14) die Hubwand (13; 13.1, 13.2) in eine Öffnungsstellung (23) gelangt, und wobei im Dachbereich (59) ein Stütz- und Führungselement (29) angeordnet ist, an dem die Hubwand (13; 13.1, 13.2) beim Verschwenken von ihrer Schließstellung (22) in ihre Öffnungsstellung (23) und umgekehrt unter gleichzeitiger Verschiebung relativ zu dem Stütz- und Führungselement (29) anliegt, und mit einem sich oberhalb des Laderaums erstreckenden Lenker (31; 31.1, 31.2) für die Hubwand (13; 13.1, 13.2),
wobei der Lenker (31; 31.1, 31.2) um eine erste Schwenkachse (32; 73.1, 73.2) eines an einem seiner Enden (33) im Dachbereich (59) ortsfest angeordneten ersten Gelenks (34; 34.1, 34.2) frei schwenkbar angelenkt ist und um eine zweite Schwenkachse (35) eines an seinem anderen Ende (36) angeordneten und mit der Hubwand (13; 13.1, 13.2) im Bereich ihres in der Schließstellung (22) oberen Endes (38) verbundenen zweiten Gelenks (41) schwenkbar angelenkt ist, **dadurch gekennzeichnet, dass** Mittel (48) zur variablen Einstellung des Abstandes (43) zwischen dem ersten Gelenk (34; 34.1, 34.2) des Lenkers (31; 31.1, 31.2) und dem zweiten Gelenk (41) des Lenkers (31; 31.1, 31.2) vorgesehen sind.

2. Kastenaufbau nach Anspruch 1, **dadurch gekennzeichnet, dass** ein einziger Lenker (31; 31.1, 31.2) vorgesehen ist.

3. Kastenaufbau nach Anspruch 1 oder 2, **dadurch gekennzeichnet, dass** die erste Schwenkachse (32; 73.1, 73.2) des ersten Gelenks (34; 34.1, 34.2) und die zweite Schwenkachse (35) des zweiten Gelenks (41) des Lenkers (31; 31.1, 31.2) in einem Abstand (52) voneinander angeordnet sind, der etwa der Hälfte der Höhe (44) der Hubwand (13; 13.1, 13.2) entspricht.

4. Kastenaufbau nach einem der Ansprüche 1 bis 3, **dadurch gekennzeichnet, dass** die Hubwand (13; 13.1, 13.2) und/oder der Lenker (31; 31.1, 31.2) zumindest in einer Zwischenstellung (45) zwischen der Öffnungsstellung (23) und der Schließstellung (22) der Hubwand (13; 13.1, 13.2) über eine obere Dachkante (42) des Kastendaches (15) nach oben hinausragt.

5. Kastenaufbau nach einem der Ansprüche 1 bis 4, **dadurch gekennzeichnet, dass** eine einzige Umlenkrolle (27) für das Zugmittel (25) vorgesehen ist.

6. Kastenaufbau nach Anspruch 5, **dadurch gekennzeichnet, dass** das Stütz- und Führungselement (29) als Stütz- und Führungsrolle (30) ausgebildet ist, die koaxial zu der Umlenkrolle (27) und ortsfest im Bereich einer seitlichen Kante des Kastendaches (15) angeordnet ist.

7. Kastenaufbau nach einem der Ansprüche 1 bis 6, **dadurch gekennzeichnet, dass** das zugmittel (25) im Bereich des unteren Endes (37) der Hubwand (13; 13.1, 13.2) an dieser angreift.

8. Kastenaufbau nach einem der Ansprüche 1 bis 7, **dadurch gekennzeichnet, dass** die Hubwand (13; 13.1, 13.2) beim Verschwenken von ihrer Schließstellung (22) in ihre Öffnungsstellung (23) und umgekehrt ständig an dem Stütz- und Führungselement (29) anliegt.

9. Kastenaufbau nach einem der Ansprüche 1 bis 8, **dadurch gekennzeichnet, dass** wenigstens ein im Dachbereich (59) angeordneter Kraftspeicher (51) vorgesehen ist, der im Abstand (52) von der ersten Schwenkachse (32; 73.1, 73.2) an dem Lenker (31; 31.1, 31.2) angreift, so dass der Schließvorgang und/oder der Öffnungsvorgang der Hubwand (13; 13.1, 13.2) unterstützt ist.

10. Kastenaufbau nach Anspruch 9, **dadurch gekennzeichnet, dass** es sich bei dem Kraftspeicher (51) um eine Zugfeder (53; 53.1 bis 53.4) handelt, deren erstes Ende (54.1) in einem ersten Abstand (52) von der ersten Schwenkachse (32; 73.1, 73.2) des Lenkers (31; 31.1, 31.2) an einem mit diesem verbundenen Befestigungsmittel (86; 87.1, 87.2) angreift, das mit dem Lenker (31; 31.1, 31.2) um die erste Schwenkachse (32) schwenkbar ist und deren zweites Ende (54.2) in einem gegenüber dem ersten Abstand (52) kleineren zweiten Abstand (57) von der ersten Schwenkachse (32; 73.1, 73.2) des Lenkers (31; 31.1, 31.2) an einer Federangriffsstelle (58; 58.1 bis 58.5) angreift, die ortsfest mit dem Dachbereich (59) verbunden ist.

11. Kastenaufbau nach Anspruch 10, **dadurch gekennzeichnet, dass** die Federangriffsstelle (58; 58.1 bis 58.5) an einem im Dachbereich (59) ortsfest angeordneten Umlenkgehäuse (60) in einem vertikalen Abstand (61) oberhalb der an dem Umlenkgehäuse (60) gelagerten ersten Schwenkachse (32; 73.1, 73.2) angeordnet ist.

12. Kastenaufbau nach Anspruch 10 oder 11, **dadurch gekennzeichnet, dass** die Federangriffsstelle (58; 58.1 bis 58.5) mit einem Gelenk für eine um eine Drehachse (66) drehbare Aufhängung (63; 63.1, 63.2) für die Feder (53; 53.1 bis 53.4) ausgebildet ist, an der das zweite Ende (54.2) der Zugfeder (53; 53.1 bis 53.4) befestigt ist.

13. Kastenaufbau nach Anspruch 11 oder 12, **dadurch gekennzeichnet, dass** zum Ausgleich von unterschiedlichen Gewichtsverhältnissen der Hubwand (13; 13.1, 13.2) und der Klappwand (14) mehrere Federangriffsstellen (58; 58.1 bis 58.5) vorgesehen sind, an denen die Zugfeder (53; 53.1 bis 53.4) wahlweise festlegbar ist, wobei wenigstens eine Federangriffsstelle (58.1 bis 58.5) quer zur ersten Schwenkachse (32) in Horizontalrichtung gegenüber einer benachbarten Federangriffsstelle versetzt angeordnet ist.

14. Kastenaufbau nach Anspruch 12 oder 13, **dadurch gekennzeichnet, dass** die Aufhängung (63; 63.1, 63.2) mit einem langgestreckten Profil (64) gestaltet ist, das eine erste Befestigungsstelle (65.1) für eine erste Feder (53.1) aufweist und das eine zweite Befestigungsstelle (65.2) für eine zweite Feder (53.2) aufweist, wobei die Drehachse (66) der Aufhängung (63; 63.1, 63.2) zwischen der ersten Feder (53.1) und der zweiten Feder (53.2) angeordnet ist.

15. Kastenaufbau nach einem der Ansprüche 12 bis 14, **dadurch gekennzeichnet, dass** die Aufhängung (63; 63.1, 63.2) als ein sich beiderseits der Drehachse (66) erstreckendes Profil (64) gestaltet ist.

16. Kastenaufbau nach einem der Ansprüche 1 bis 15, **dadurch gekennzeichnet, dass** an dem Lenker (31; 31.1, 31.2) ein Befestigungskörper (85) befestigt ist, an dem die Feder (53; 53.1 bis 53.4) angreift und der dazu bestimmt ist, unterschiedliche Federspannungen einstellen zu können.

17. Kastenaufbau nach Anspruch 16, **dadurch gekennzeichnet, dass** der Befestigungskörper (85) dazu bestimmt ist, eine stufenlose Einstellung der Federspannung zu ermöglichen.

18. Kastenaufbau nach Anspruch 16 oder 17, **dadurch gekennzeichnet, dass** der Befestigungskörper (85) als ein sich an dem Lenker (31; 31.1, 31.2) abstützender und längs desselben verschiebbarer Schiebeteil (67) gestaltet ist, an dem ein Schenkel (68) mit einem sich längs des Lenkers (31; 31.1, 31.2) erstreckenden Innengewinde (69) befestigt ist, in dem ein Gewindebolzen (70) mit Außengewinde (71) eingeschraubt ist, dessen Ende sich an einem Querschenkel (72) des Lenkers (31; 31.1, 31.2) abstützt.

19. Kastenaufbau nach einem der Ansprüche 1 bis 18, **dadurch gekennzeichnet, dass** er an seinen beiden seitlichen Stirnseiten jeweils eine zweiflügelige Seitenwand (12.1, 12.2) aufweist, wobei ein erster Lenker (31.1) einer ersten Seitenwand (12.1) um eine im Dachbereich (59) des Kastenaufbaus (10) ortsfest angeordnete erste Lenkerachse (73.1) schwenkbar gelagert ist, und wobei ein zweiter Lenker (31.2) einer zweiten Seitenwand (12.2) um eine im Dachbereich (59) des Kastenaufbaus (10) ortsfest angeordnete zweite Lenkerachse (73.2) schwenkbar gelagert ist, wobei der zweite Lenker (31.2) in Richtung der Drehachse (74.1) des ersten Lenkers quer zu dem ersten Lenker (31.1) versetzt angeordnet ist, so dass sich die beiden Lenker (31.1, 31.2) bei vollständig über das Kastendach (15) hochgeschwenkten und sich im Bereich ihrer in ihren Schließstellungen oberen Enden (38.1, 38.2) überlappenden Hubwänden (13.1, 13.2) kreuzen. Enden (38.1, 38.2) überlappenden Hubwänden (13.1, 13.2) kreuzen.

## Claims

1. Box body (10), particularly for utility vehicles, with a box floor (16), a box roof (15), a loading space (18) and at least one double-panelled side wall (12; 12.1, 12.2), which comprises a folding wall (14) articulated in the region of the box floor (16) and pivotable out about a pivot axis (19) from its closed position (20) to an open position (21), and with a raisable wall (13; 13.1, 13.2), which is pivotable up in the roof region (59) into an open setting (23, 24) and which is connected with the folding wall (14) by at least one flexible traction means (25), which is looped around a deflecting roller (27) arranged in the roof region (59) and which engages the folding wall (14) at a spacing (28) from the pivot axis (19) so that when the folding wall (14) is folded down the raisable wall (13; 13.1, 13.2) goes into an open setting (23), and wherein arranged in the roof region (59) is a supporting and guiding element (29) against which the raisable wall (13; 13.1, 13.2) bears on pivotation from Its closed setting (22) into its open setting (23) and conversely with simultaneous displacement relative to the supporting and guide element (29), and with a guide (31; 31.1, 31.2), which extends above the loading space, for the raisable wall (13; 13.1, 13.2), wherein the guide (31; 31.1, 31.2) is articulated to be freely pivotable about a first pivot axis (32; 73.1, 73.2) of a first joint (34; 34.1, 34.2), which is arranged in stationary position at one of its ends (33) in the roof region (59), and articulated to be pivotable about a second pivot axis (35) of a second joint (41), which is arranged at its other end (36) and connected with the raisable wall (13; 13.1, 13.2) in the region of its end (38) which is upper in the closed setting (22), **characterized in that** means (48) for variable setting of the spacing (43) between the first joint (34; 34.1, 34.2) of the guide (31; 31.1, 31.2) and the second joint (41) of the guide (31; 31.1, 31.2) are provided.

2. Box body according to claim 1, **characterised in that** a single guide (31; 31.1, 31.2) Is provided.

3. Box body according to claim 1 or 2, **characterised in that** the first pivot axis (32; 73.1, 73.2) of the first joint (34; 34.1. 34.2) and the second pivot axis (35) of the second joint (41) of the guide (31; 31.1, 31.2) are arranged at a mutual spacing (52) corresponding with approximately halt the height (44) of the raisable wall (13; 13.1, 13.2).

4. Box body according to any one of claims 1 to 3, **characterised in that** the raisable wall (13; 13.2, 13.2) and/or the guide (31; 31.1, 31.2) at least in an intermediate setting (45) between the open setting (23) and the closed setting (22) of the raisable wall (13; 13.1, 13.2) projects or project upwardly beyond an upper roof edge (42) of the box roof (15).

5. Box body according to any one of claims 1 to 4, **characterised in that** a single deflecting roller (27) for the traction means (25) is provided.

6. Box body according to claim 5, **characterised in that** the supporting and guiding element (29) is constructed as a supporting and guiding roller (30) which is arranged coaxially with the deflecting roller (27) and in stationary position in the region of a side edge of the box roof (15).

7. Box body according to any one of claims 1 to 6, **characterised in that** the traction means (25) engages the raisable wall (13; 13.1, 13.2) in the region or the lower end (37) thereof.

8. Box body according to any one of claims 1 to 7, **characterised in that** the raisable wall (13; 13.1, 13.2) on pivotation from its closed setting (22) into its open setting (23) and conversely constantly bears against the supporting and guiding element (29).

9. Box body according to any one of claims 1 to 8, **characterised in that** at least one force store (51), which is arranged in the roof region (69) and engages the guide (31; 31.1, 31.2) at a spacing (52) from the first pivot axis (32; 73.1, 73.2), is provided so that the closing process and/or the opening process of the raisable wall (13' 13.1, 13.2) is assisted.

10. Box body according to claim 9, **characterised in that** the force store (51) is a tension spring (53; 53.1 to 53.4), the first end (54.1) of which engages, at a spacing (52) from the first pivot axis (32; 73.1, 73.2) of the guide (31; 31.1, 31.2), a fastening means (86; 87.1, 87.2), which is connected therewith and which is pivotable with the guide (31; 31.1, 31.2) about the first pivot axis (32), and the second end (54.2) of which engages, at a second spacing (57) - which is smaller by comparison with the first spacing (52) - from the first pivot axis (32; 73.1, 73.2) of the guide (31; 31.1, 31.2), a spring engagement point (58; 58.1 to 58.5) connected in fixed position with the roof region (59).

11. Box body according to claim 10, **characterised in that** the spring engagement point (58; 58.1 to 58.5) is arranged at a deflecting housing (60), which is arranged in fixed position in the roof region (59), at a vertical spacing (61) above the first pivot axis (32; 73.1, 73.2) mounted at the deflecting housing (60).

12. Box body according to claim 10 or 11, **characterised in that** the spring engagement point (58; 58.1 to 58.5) is formed with a joint for a suspension means (63; 63.1, 63.2), which is rotatable about an axis (66) of rotation, for the spring (53; 53.1, to 53.4), to which suspension means of the second end (54.2) of the tension spring (53; 53.1 to 53.4) is fastened.

13. Box body according to claim 11 or 12, **characterised in that** in order to provide compensation for different weight conditions of the raisable wall (13; 13.1, 13.2) and the folding wall (14) several spring engagement points (58; 58.1 to 58.5) are provided at which the tension spring (53; 53.1 to 53.4) Is selectably fixable, wherein at least one spring engagement point (58.1 to 58.5) is arranged transversely to the pivot axis (32) in horizontal direction opposite an adjacent spring engagement point.

14. Box body according to claim 12 or 13, **characterised in that** the suspension means (63; 63.1, 63.2) is formed with an elongate profile (64) which has a first fastening point (65.1) for a first spring (53.1) and a second fastening point (65.2) for a second spring (53.2), wherein the axis (66) of rotation of the suspension means (63; 63.1, 63.2) is arranged between the first spring (53.1) and the second spring (53.2).

15. Box body according to any one of claims 12 to 14, **characterised in that** the suspension means (63; 63.1, 63.2) is formed as a profile (64) extending on both sides of the axis (66) of rotation.

16. Box body according to any one of claims 1 to 15, **characterised in that** a fastening body (85), at which the spring (53; 53.1 to 53.4) engages and which is intended for the purpose of being able to adjust different spring tensions, is fastened to the guide (31; 31.1, 31.2).

17. Box body according to claim 16, **characterised in that** the fastening body (85) is intended for the purpose of enabling a stepless setting of the spring tension.

18. Box body according to claim 16 or 17, **characterised in that** the fastening body (85) is formed as a slide part (67), which is supported at the guide (31; 31.1, 31.2) and displaceable therealong and to which a limb (68) with an internal thread (69) extending along the guide (31; 31.1, 31.2) is fastened, into which internal thread a threaded pin (70) with an external thread (71) is screwed, the end of the pin being supported at a transverse limb (72) of the guide (31; 31.1, 31.2).

19. Box body according to any one of claims 1 to 18, **characterised in that** it has at each of its two lateral end faces a respective double-panelled side wall (12. 1, 12.2), wherein a first guide (31.1) of a first side wall (12.1) is mounted to be pivotable about a first guide axis (73.1) arranged in fixed position in the roof region (59) of the box body (10) and wherein a second guide (31.2) of a second side wall (12.2) is mounted to be pivotable about a second guide axis (73.2) arranged in stationary position in the roof region (59) of the box body (10), wherein the second guide (31.2) is arranged to be offset in the direction of the axis (74.1) of rotation of the first guide transversely to the first guide (31.1) so that the two guides (31.1, 31.2) intersect when raisable walls (13.1, 13.2) are pivoted up beyond the box roof (15) and overlap in the region of their ends (38.1, 38.2) upper in the closed settings thereof.

## Revendications

1. Structure de caisse (10), en particulier pour véhicules utilitaires, comportant un fond (16), un toit (15), un espace de chargement (18) et au moins une paroi latérale à deux battants (12 ; 12.1, 12.2) qui comporte une paroi rabattable (14) articulée au niveau du fond (16) et pouvant être pivotée, autour d'un axe de pivotement (19), de sa position fermée (20) à une position ouverte (21), et comportant une paroi élévatrice (13 ; 13.1, 13.2), pouvant être pivotée vers le haut dans une position ouverte (23, 24) dans la zone de toit (59), paroi élévatrice qui est rattachée à la paroi rabattable (14) par au moins un moyen de traction flexible (25), moyen de traction qui est enroulé autour d'une poulie de renvoi (27) disposée dans la zone de toit (59) et est en prise avec la paroi rabattable (14), à distance (28) de l'axe d'articulation (19), de telle sorte que, lors du rabattement de la paroi rabattable (14), la paroi élévatrice (13 ; 13.1, 13.2) regagne sa position ouverte (23), et un élément d'appui et de guidage (29) étant disposé dans la zone de toit (59), élément sur lequel repose la paroi élévatrice (13 ; 13.1, 13.2) lors du pivotement de sa position fermée (22) à sa position ouverte (23) et inversement, avec décalage simultané par rapport à l'élément d'appui et de guidage (29), et comportant une bielle (31 ; 31.1, 31.2), pour la paroi élévatrice (13 ; 13.1, 13.2), s'étendant au-dessus de l'espace de chargement,
la bielle (31 ; 31.1, 31.2) étant articulée de manière à pouvoir pivoter librement autour d'un premier axe de pivotement (32 ; 73.1, 73.2) d'une première articulation (34 ; 34.1, 34.2) agencée de manière fixe sur l'une de ses extrémités (33) dans la zone de toit (59) et étant articulée de manière à pouvoir pivoter autour d'un second axe de pivotement (35) d'une seconde articulation (41) agencée sur son autre extrémité (36) et reliée à la paroi élévatrice (13 ; 13.1, 13.2) au niveau de son extrémité supérieure (38) dans la position fermée (22), **caractérisée en ce que** l'on a prévu des moyens (48) de réglage variable de l'écartement (43) entre la première articulation (34 ; 34.1, 34.2) de la bielle (31 ; 31.1, 31.2) et la seconde articulation (41) de la bielle (31 ; 31.1, 31.2).

2. Structure de caisse selon la revendication 1, **caractérisée en ce qu'**on a prévu une bielle unique (31 ; 31.1, 31.2).

3. Structure de caisse selon la revendication 1 ou 2, **caractérisée en ce que** le premier axe de pivotement (32 ; 73.1, 73.2) de la première articulation (34 ; 34.1, 34.2) et le second axe de pivotement (35) de la seconde articulation (41) de la bielle (31 ; 31.1, 31.2) sont disposés à une distance (52) l'un de l'autre qui correspond à environ la moitié de la hauteur (44) de la paroi élévatrice (13 ; 13.1, 13.2).

4. Structure de caisse selon l'une quelconque des revendications 1 à 3, **caractérisée en ce que** la paroi élévatrice (13 ; 13.1 , 13.2) et / ou la bielle (31 ; 31.1, 31.2) surplombent, vers le haut, une arête supérieure (42) du toit (15), au moins dans une position intermédiaire (45) entre la position ouverte (23) et la position fermée (22) de la paroi élévatrice (13 ; 13.1, 13.2).

5. Structure de caisse selon l'une quelconque des revendications 1 à 4, **caractérisée en ce qu'**on a prévu une poulie de renvoi (27) unique pour le moyen de traction (25).

6. Structure de caisse selon la revendication 5, **caractérisée en ce que** l'élément d'appui et de guidage (29) est réalisé sous forme de rouleau d'appui et de guidage (30) qui est disposée dans le sens coaxial par rapport à la poulie de renvoi (27) et de manière fixe au niveau d'une arête latérale du toit (15).

7. Structure de caisse selon l'une quelconque des revendications 1 à 6, **caractérisée en ce que** le moyen de traction (25) est en prise avec la paroi élévatrice (13 ; 13.1, 13.2), au niveau de l'extrémité inférieure (37) de celle-ci.

8. Structure de caisse selon l'une quelconque des revendications 1 à 7, **caractérisée en ce que** la paroi élévatrice (13 ; 13.1, 13.2) repose on permanence sur l'élément d'appui et de guidage (29) lors du pivotement de sa position fermée (22) à sa position ouverte (23) et inversement.

9. Structure de caisse selon l'une quelconque des revendications 1 à 8, **caractérisée en ce qu'**on a prévu au moins un accumulateur d'énergie (51), disposé dans la zone de toit (59), qui est en prise avec la bielle (31 ; 31.1, 31.2) à distance (52) du premier axe de pivotement (32 ; 73.1, 73.2) de telle sorte que le processus de fermeture et / ou le processus d'ouverture de le paroi élévatrice (13 ; 13.1, 13.2) soient soutenus.

10. Structure de caisse selon la revendication 9, **caractérisée en ce que** l'accumulateur d'énergie (51) est un ressort de traction (53 ; 53.1 à 53.4) dont la première extrémité (54.1) est en prise, à une première distance (52) du premier axe de pivotement (32 ; 73.1, 73.2) de la bielle (31 ; 31.1, 31.2), avec un moyen de fixation (86 ; 87.1, 87.2) rattaché à celle-ci, moyen de fixation qui peut pivoter avec la bielle (31 31.1, 31.2) autour du premier axe de pivotement (32), et dont la seconde extrémité (54.2) est en prise, à une seconde distance (57), inférieure à la première distance (52), du premier axe de pivotement (32 ; 73.1, 73.2) de la bielle (31 ; 31.1, 31.2), avec un point d'action du ressort (58 ; 58.1 à 58.5) qui est relié de manière fixe à la zone de toit (59).

11. Structure de caisse selon la revendication 10, **caractérisée en ce que** le point d'action du ressort (58 ; 58.1 à 58.5) est agencé sur un boîtier de renvoi (60) disposé de manière fixe dans la zone de toit (59), à une distance verticale (61), au-dessus du premier axe de pivotement (32 ; 73.1, 73.2) monté sur le boîtier de renvoi (60).

12. Structure de caisse selon la revendication 10 ou 11, **caractérisée en ce que** le point d'action du ressort (58 ; 58.1 à 58.5) est réalisé avec une articulation pour une suspension (63 ; 63.1, 63.2), pouvant tourner autour d'un axe de rotation (66), pour le ressort (53 ; 53.1 à 53.4), suspension sur laquelle est fixée la seconde extrémité (54.2) du ressort de traction (53 ; 53.1 à 53.4).

13. Structure de caisse selon la revendication 11 ou 12, **caractérisée en ce que,** pour compenser les différentes conditions pondérales de la paroi élévatrice (13 ; 13.1, 13.2) et de la paroi rabattable (14), on a prévu plusieurs points d'action du ressort (58 ; 58.1 à 58.5) sur lesquels le ressort de traction (53 ; 53.1 à 53.4) peut être fixé au choix, au moins un point d'action du ressort (58.1 à 58.5) étant disposé perpendiculairement au première axe de pivotement (32), décalé dans le sens horizontal par rapport à un point d'action du ressort adjacent.

14. Structure de caisse selon la revendication 12 ou 13, **caractérisée en ce que** la suspension (63 ; 63.1, 63.2) est réalisée avec un profilé allongé (64) qui comporte un premier point de fixation (65.1) pour un premier ressort (53.1) et qui comporte un second point de fixation (65.2) pour un second ressort (53.2), l'axe de rotation (66) de la suspension (63 ; 63.1, 63.2) étant disposé entre le premier ressort (53.1) et le second ressort (53.2).

15. Structure de caisse selon l'une quelconque des revendications 12 à 14, **caractérisée en ce que** la suspension (63 ; 63.1, 63.2) est réalisée sous la forme d'un profilé (64) s'étendant des deux côtés de l'axe de rotation (66).

16. Structure de caisse selon l'une quelconque des revendications 1 à 15, **caractérisée en ce qu'**un élément de fixation (85) est fixé sur la bielle (31 ; 31.1, 31.2), élément de fixation avec lequel le ressort (53 ; 53.1 à 53.4) est en prise et qui est conçu pour permettre le réglage de différentes tensions de ressort.

17. Structure de caisse selon la revendication 16, **caractérisée en ce que** l'élément de fixation (85) est conçu pour permettre un réglage sans gradations de la tension du ressort.

18. Structure de caisse selon la revendication 16 ou 17, **caractérisée en ce que** l'élément de fixation (85) est réalisé sous la forme d'une pièce coulissante (67) en appui sur la bielle (31 ; 31.1, 31.2) et déplaçable le long de celle-ci, pièce coulissante sur laquelle est fixé un montant (68) avec un filet interne (69) s'étendant le long de la bielle (31 ; 31.1, 31.2), filet interne dans lequel est vissé un boulon fileté (70) avec filet externe (71) dont l'extrémité s'appuie sur un montant transversal (72) de la bielle (31 ; 31.1, 31.2).

19. Structure de caisse selon l'une quelconque des revendications 1 à 18, **caractérisée en ce qu'**elle comporte une paroi latérale à deux battants (12.1, 12.2) sur chacun de ses deux fronts latéraux, une première bielle (31.1) d'une première paroi latérale (12.1) étant montée de façon à pouvoir pivoter autour d'un premier axe de bielle (73.1) agencé de manière fixe dans la zone de toit (59) de la structure de caisse (10) et une seconde bielle (31.2) d'une seconde paroi latérale (12.2) étant montée de façon à pouvoir pivoter autour d'un second axe de bielle (73.2) agencé de manière fixe dans la zone de toit (59) de la structure de caisse (10), la seconde bielle (31.2) étant agencée en décalage, perpendiculairement à la première bielle (31.1), en direction de l'axe de rotation (74.1) de la première bielle de telle sorte que les deux bielles (31.1, 31.2) se croisent lorsque les parois élévatrices (13.1, 1.2) sont entièrement pivotées vers le haut, au-dessus du toit (15), et se chevauchent au niveau de leurs extrémités supérieures (38.1, 38.2) dans leurs positions fermées.
